# FASCICULE DE BREVET EUROPEEN

(11) **EP 1 828 297 B1**
(45) Date de publication et mention de la délivrance du brevet: **02.04.2008**
(21) Numéro de dépôt: 05850556.1
(22) Date de dépôt: 20.12.2005
(51) Int. Cl.: C08K 5/101

(54) **PREPARATION ET TRAITEMENT DE COMPOSITIONS BITUMINEUSES**
HERSTELLUNG UND BEHANDLUNG VON BITUMINÖSEN ZUSAMMENSETZUNGEN
PREPARATION AND TREATMENT OF BITUMINOUS COMPOSITIONS

(30) Priorité: 22.12.2004 FR 0413750
(43) Date de publication de la demande: 05.09.2007
(73) Titulaire: ROQUETTE FRERES, 62136 Lestrem (FR)
(72) Inventeur: MENTINK, Léon, F-59100 Roubaix (FR); BERNAERTS, Joël, F-62122 Labeuvrière (FR); MAZE, Michel, F-33000 Bordeaux (FR); DELFOSSE, Frédéric, F-33600 Pessac (FR)
(74) Mandataire: Cabinet Plasseraud
(86) Numéro de dépôt international: PCT/FR2005/003207
(87) Numéro de publication internationale: WO 2006/070104

(56) Documents cités:
- WO-A1-99/45060
- GB-A- 790 472
- US-A- 3 035 930
- US-A- 3 594 202
- US-A- 5 011 620
- US-A- 6 156 113
- US-A- 6 165 962
- US-A1- 2003 114 635

## Description

La présente invention a pour objet l'utilisation de composés organiques particuliers pour la préparation ou pour le traitement de compositions bitumineuses. Elle a également pour objet les compositions bitumineuses ainsi préparées ou traitées au moyen de ces composés organiques particuliers.

Par « compositions bitumineuses », on entend en particulier :
a) le pétrole brut et les bitumes, asphaltes et mazouts issus du pétrole, ainsi que les liants bitumineux à base de tels produits,
b) les bitumes et asphaltes d'origine naturelle, ainsi que les liants bitumineux à base de tels produits,
c) toutes fractions obtenues par toutes techniques de séparation à partir des bitumes, asphaltes et mazouts de toutes origines,
d) les produits carbochimiques issus de la pyrolyse du charbon ,
e) les goudrons de toutes origines, en particulier issus de la houille ou du bois et toutes les fractions qui peuvent en être obtenues,
f) les analogues rhéologiques des produits, notamment des bitumes et liants bitumineux, précités et à base de résines d'origine naturelle (colophanes naturelles, poix, résines accroides, résines de balsamier, gomme-laque etc.),
g) les analogues rhéologiques des produits, notamment des bitumes et liants bitumineux, précités et à base de tous dérivés obtenus par toutes techniques de modification, notamment chimique, desdites résines naturelles telles que les colophanes modifiées et les résines terpéniques modifiées,
h) toutes compositions contenant au moins 25%, de préférence au moins 50%, en poids d'au moins l'un quelconque des produits a) à g) susmentionnés et pouvant contenir par ailleurs, par exemple, au moins un autre composant choisi parmi l'eau, les huiles minérales, animales et végétales et les dérivés desdites huiles comme par exemple les esters méthyliques, les résines synthétiques, les matières élastomères ou (thermo)plastiques d'origine naturelle ou synthétique telles que les caoutchoucs, les matières colorantes et les granulats (cailloux, graviers, gravillons, sables, etc.).

Ces compositions sont destinées en premier lieu à la réalisation de matériaux pour le bâtiment et les travaux publics (« BTP ») et en particulier pour les constructions routières.

En second lieu, ces compositions sont destinées à la réalisation d'opérations d'étanchéification, non seulement pour le BTP mais aussi dans les domaines de la construction navale, automobile, ou aéronautique, et dans l'agriculture. Elles peuvent notamment être des compositions bitumineuses ou asphaltiques telles que décrites ou référencées :
- dans le chapitre intitulé « Asphalt and Bitumen » en pages 97 à 117, volume , 4 de la 6ème Edition de l'ouvragé « Ullmann's Encyclopedia of Industrial Chemistry » (2003), WILEY-VCH Verlag GmbH & Co. KgaA, Weinheim (Allemagne), ou
- dans le chapitre intitulé « ASPHALT » en pages 689 à 724, Volume 3 de la 4ème édition de l'ouvrage « KIRK-OHTMER » , Encyclopedia of Chemical Technology » (1992), John Wiley & Sons, Inc. ou
- dans le sous-chapitre intitulé « Bituminous products » en pages 612 à 618, Volume 4 de la 4ème édition précitée de l'ouvrage « KIRK-OHTMER », ou
- dans l'un quelconque des brevets FR 2 721 043, EP 900 822 B1, FR 2 785 603, US 5,605,946, EP 1 466 878, EP 1 482 012 ou WO 2005/087869.
- dans l'une quelconque des normes, nationales, européennes ou internationales, relatives aux bitumes et aux liants bitumineux telles que les normes FD T 65-000, NF EN 12591 ou NF EN 12597.

Il peut s'agir en particulier de bitumes ou de liants bitumineux se présentant sous forme solide, pâteuse ou liquide, y compris sous forme d'émulsions, notamment aqueuses, tels que notamment des bitumes purs, des bitumes routiers, des bitumes industriels, des bitumes oxydés, des bitumes fluxés, des bitumes fluidifiés, des bitumes modifiés par des polymères, des bitumes pour émulsions et des émulsions de bitume, anioniques ou cationiques.

Il peut s'agir également de compositions formulées telles que des enrobés bitumineux associant au moins un liant bitumineux à au moins un type de granulat, ou de compositions plus élaborées et mises en forme telles que des films, plaques ou feuilles d'étanchéité, d'isolation (par exemple thermique ou phonique) et/ou de couverture, des géomembranes etc., dont la structure contient au moins une couche bitumineuse.

Comme indiqué précédemment, les compositions bitumineuses préparées et/ou traitées conformément à l'invention peuvent également être des analogues rhéologiques des produits a) à e) précités, en particulier de bitumes ou de liants bitumineux, lesdits analogues rhéologiques étant à base d'au moins une résine d'origine naturelle, éventuellement modifiée ultérieurement, telles que décrites :
- dans le chapitre intitulé « Resins, Natural » en pages 337 à 355, Volume 31 de la 6ème édition précitée de l'ouvrage « Ullmann's Encyclopedia », ou
- dans le chapitre intitulé « Resins, Natural » en pages 291 à 302 de la 4ème édition précitée de l'ouvrage « Kirk-OHTMER», ou
- dans les brevets EP 304 767 ou EP 1 466 878 A1 et à base, par exemple, de résine pirène terpène, d'ester phénolique de colophane modifiée ou d'ester maléïque de résine de colophane.

Par « analogue rhéologique » de l'un quelconque des produits a) à e) précités, en particulier de bitume ou liant bitumineux, on entend toute composition préparée ou traitée conformément à l'invention dans laquelle le produit en question, en particulier le bitume pur ou le liant bitumineux, a été substitué, en tout ou partie, par une résine d'origine naturelle, éventuellement modifiée, et ce dans des conditions telles (notamment en termes de sélection de la nature et du taux d'introduction de résine mais également de tout autre composant entrant dans la formulation finale de ladite composition) que ladite composition présente des caractéristiques rhéologiques, notamment en termes de pénétrabilité, température de ramollissement et/ou viscosité, qui sont similaires ou relativement proches de celles du produit, en particulier du bitume ou liant bitumineux, qu'elle vise à remplacer.

Il peut s'agir en particulier, comme décrit dans les brevets EP 304 767 ou EP 1 466 878 précités, de liants d'origine végétale aptes à se substituer à des liants bitumineux en vue de la réalisation de matériaux pour le bâtiment et les travaux publics (« HTP »), y compris de trottoirs.

Dans ce secteur et plus généralement dans tout domaine d'activité faisant appel classiquement à des compositions bitumineuses (BTP mais aussi construction navale, automobile ou aéronautique, agriculture, etc.) ou devant traiter de telles compositions (activités de dépollution ou de nettoyage de structures, inertes ou non), il est recherché un moyen qui, idéalement, présente l'ensemble des critères listés ci-après :
a) être efficace pour toute fonction auquel il est destiné dans une application donnée, par exemple comme agent fluxant, i.e. comme agent apte à abaisser la viscosité à chaud (80-200°C) de compositions bitumineuses tout en leur assurant, après refroidissement à température ambiante et de façon suffisamment rapide, les caractéristiques mécaniques requises et notamment une montée en cohésion suffisante.
b) ne pas détériorer, éventuellement améliorer, les conditions de préparation et/ou les conditions d'utilisation de toute composition dans laquelle il est incorporé,
c) ne pas détériorer, éventuellement améliorer, les performances et caractéristiques physiques intermédiaires et finales de ladite composition ou de tout matériau la contenant,
d) présenter une absence de nocivité et le minimum de désagréments, notamment en regard des réglementations toujours plus contraignantes en termes de protection de l'homme et de l'environnement,
e) être issu de matières d'origine naturelle et si possible renouvelables, de façon à s'inscrire dans une démarche de développement durable.

Dans le domaine particulier des compositions bitumineuses destinées au secteur du bâtiment et des travaux publiques (BTP), par exemple à l'industrie routière ((re)construction, entretien et réparation des routes), il est tout particulièrement recherché un moyen qui, idéalement et en regard des critères précités :
a) soit avantageusement utilisable comme adjuvant fonctionnel, notamment comme agent fluxant,
b) soit avantageusement utilisable tant dans des compositions liantes destinées à être appliquées à chaud, i.e. entre environ 80 et 200°C (i. e. mélangées à chaud avec des granulats et/ou répandues à chaud sur un support avant application des granulats) et généralement anhydres, que dans des compositions liantes destinées à être appliquées à froid, i.e. à une température généralement inférieure à 100°C (i.e. mélangées à froid avec des granulats et/ou répandues à froid sur un support avant application des granulats), se présentant généralement sous forme d'émulsions aqueuses,
c) permette aux produits résultants, par exemple aux enrobés à chaud, aux enrobés à froid et enduits obtenus à partir des desdites compositions liantes, d'acquérir et de conserver des caractéristiques mécaniques et rhéologiques les rendant propres à l'usage auquel ils sont destinés, notamment à leur usage routier,
d) soit écologiquement plus acceptable que les adjuvants, par exemple les agents fluxants, d'origine fossile (pétrole, houille) et notamment :
   - ne contienne pas de substances dangereuses et notamment de substances reconnues comme cancérigènes ou mutagènes, telles que les hydrocarbures aromatiques, en particulier le benzène et ses dérivés, le naphtalène ou le chrysène,
   - présente une plus faible propension à générer des vapeurs, y compris lors de l'application à chaud des compositions liantes,
   - présente un point éclair suffisamment élevé, de préférence supérieur à celui des adjuvants d'origine fossile qui est généralement inférieur à 100°C, le plus souvent compris entre 50 et 90°C,
   - présente une odeur acceptable, i.e. significativement moins incommodante ou irritante que les adjuvants d'origine fossile, et soit de préférence sans odeur,
   - présente une bonne rinçabilité, i.e. une bonne aptitude à être entraîné par une solution aqueuse tout en étant inoffensif pour l'environnement (absence de bioaccumulation).

Il a été proposé à cet effet, dans le domaine particulier des émulsions de bitume, l'utilisation d'huile de colza ou d'un dérivé d'huile de colza, en association éventuelle avec d'autres huiles végétales (huile de lin notamment), en tant qu'agent fluxant du bitume comme décrit dans le brevet FR 2 721 043 précité.

Il a ensuite été préconisé, dans le domaine particulier des liants bitumineux pour la construction de routes, la mise en oeuvre d'agents fluxants ou fluidifiants consistant en des monoesters méthyliques d'huile de tournesol, éventuellement isomérisée, ou d'huile de lin comme décrit dans le brevet EP 900 822 B1 précité. Ces monoesters méthyliques doivent, en théorie, se transformer chimiquement, notamment réticuler ou se polymériser, au contact de l'air après répandage du liant pour augmenter la viscosité de ce dernier et donc, en théorie, assurer une montée en cohésion suffisante au cours du temps.

En pratique, cette polymérisation, également appelée siccativation, est généralement insuffisante et il est fortement conseillé l'introduction de catalyseurs (ou agents siccatifs) métalliques tels que des sels organiques de cobalt, manganèse ou zirconium. Outre le fait qu'elle complique les procédés et en augmente le coût et ce, sans efficacité suffisante, notamment en termes de montée en cohésion, cette introduction n'est pas satisfaisante du point de vue de l'environnement et de la santé.

De tels monoesters obtenus à partir d'huiles végétales ou animales ont par ailleurs été utilisés dans des bitumes mis en oeuvre initialement sous forme de poudre dans le but de préparer, à froid, des enrobés propres à être répandus, également à froid, comme décrit dans le brevet FR 2 785 603 précité.

L'introduction de catalyseurs de siccativation est également soulignée dans ce document.

Plus récemment enfin, il a été proposé dans le brevet EP 1 466 878 A1, de substituer les liants bitumineux par des « analogues rhéologiques », i.e. des liants d'origine végétale pour la réalisation de couches de construction routière ou de génie civil.

Les liants revendiqués, sélectionnés pour leurs caractéristiques de pénétrabilité, sont exempts de tout élastomère naturel et synthétique ou de tout polymère thermoplastique et contiennent de 2 à 98% en poids d'au moins une résine naturelle ou naturelle modifiée, d'origine végétale et de point de ramollissement sélectionné. Il peut s'agir notamment de résines de colophane modifiée ou de type pinène terpène.

Les compositions à base de résine ainsi obtenues contiennent par ailleurs de 98 à 2% en poids d'une huile d'origine végétale présentant une viscosité également sélectionnée. Il peut s'agir notamment d'huile de lin, de soja, de bois ou de ricin déshydratée, ou d'esters méthyliques d'huile de colza.

A la connaissance de la Demanderesse cependant, le seul moyen effectivement mis en oeuvre à ce jour à une échelle industrielle et commerciale en vue de remplacer les adjuvants, notamment les agents fluxants, d'origine fossile lors de la préparation des compositions bitumineuses, consiste en l'utilisation de monoesters méthyliques d'huiles végétales, en particulier d'huile de tournesol ou de colza.

Cependant, comme souligné précédemment, ces esters méthyliques d'huiles végétales, associés ou non à des agents siccatifs, ne répondent pas à l'ensemble des objectifs techniques, économiques et environnementaux aujourd'hui requis.

Et il est du mérite de la Demanderesse d'avoir trouvé que certains autres composés organiques issus également en général de matières d'origine naturelle et renouvelables pouvaient :
- non seulement se substituer à ces adjuvants d'origine fossile,
- mais encore, en regard notamment des critères a) à d) précités, se révéler au moins aussi avantageux, voire plus avantageux pour certains aspects, que les monoesters méthyliques d'huiles végétales préconisés dans l'art antérieur.

Ce mérite est d'autant plus grand qu'il a été constaté que ces mêmes composés organiques sélectionnés pouvaient en outre être avantageusement utilisés comme moyen de traitement, notamment de nettoyage, des mêmes compositions bitumineuses, en particulier comme moyen d'élimination de résidus, traces ou tâches de telles compositions se trouvant à la surface et/ou dans la masse constitutive de matières et objets de toutes natures.

De façon plus précise, la présente invention a pour objet l'utilisation, pour la préparation ou le traitement de compositions bitumineuses telles que définies précédemment, d'au moins un composé choisi dans le groupe constitué de :
- les esters des acides glycolique, lactique et gluconique, les esters méthyliques, éthyliques et iso-butyliques des acides glutarique, succinique et adipique, et
- les éthers ou esters d'un produit issu de la déshydratation interne d'un sucre, de préférence d'un sucre hydrogéné.

Concernant l'ensemble des esters précités, il peut s'agir de monoesters et/ou de diesters en fonction notamment du nombre de fonctions COOH de l'acide considéré, potentiellement estérifiables, mais également du niveau d'estérification effectif (total ou non) de chacune desdites fonctions.

Selon une première variante de l'invention, les esters des acides glycolique, lactique ou gluconique sont des esters de chacun de ces acides et d'un alcool comprenant au plus 14 atomes de carbone, de préférence d'un alcool contenant de 1 à 12 atomes de carbone. Il peut s'agir notamment de lactates de méthyle, d'éthyle, de butyle, d'isobutyle, d'hexyle, d'éthylhexyle, d'octyle, de décyle ou de dodécyle ou de mélanges quelconques d'au moins deux quelconques de ces produits.

Selon une seconde variante, il peut s'agir également de mélanges d'au moins deux produits choisis parmi les esters méthyliques, éthyliques ou iso-butyliques des acides glutarique, succinique ou adipique.

Selon une autre variante, le composé utilisé conformément à l'invention pour la préparation ou le traitement d'une composition bitumineuse, est un éther ou ester d'un produit issu de la déshydratation interne d'un sucre, ledit sucre étant choisi parmi le glucose, le maltose, le lactose, le galactose, le saccharose, le mannose, le xylose, le ribose, le fructose, l'isomaltulose, le sorbose et l'idose, les équivalents hydrogénés des sucres précités et les mélanges d'au moins deux de ces produits.

De manière avantageuse, ledit composé est un éther ou un ester d'un produit issu de la déshydratation interne du sorbitol, du mannitol ou de l'iditol et notamment un éther ou un ester d'isosorbide, de sorbitan, d'isommanide, de mannitan, d'isoidide ou d'iditan, ou un mélange d'au moins deux de ces produits.

Il peut s'agir en particulier :
- d'un monoéther, d'un diéther ou d'un mélange d'au moins un monoéther et d'au moins un diéther de ces produits, ou
- d'un monoester, d'un diester ou d'un mélange d'au moins un monoester et d'au moins un diester de ces produits.

De préférence, ledit composé est constitué majoritairement, i.e. pour au moins 50 % de son poids (sec/sec), de diéther(s) ou de diester(s) d'isosorbide, de sorbitan, d'isomannide et /ou d'isoidide.

Selon une autre variante, ledit composé est avantageusement choisi dans le groupe comprenant les dérivés éthylés, méthylés, acétylés, butylés, isobutylés, hexylés, 2-éthylhexylés, octénylés, laurylés, palmitylés, stéarylés ou oléylés d'isosorbide, de sorbitan, d'isommanide et/ou d'isoidide et les mélanges d'au moins deux de ces produits.

De manière particulièrement avantageuse, ledit composé est constitué pour au moins 50 %, de préférence au moins 80 %, de son poids (sec/sec), de dérivés méthylés d'isosorbide, de sorbitan, d'isomannide et/ou d'isoidide.

Ledit composé peut notamment être constitué pour au moins 50 %, de préférence au moins 80 %, de son poids (sec/sec), de diméthylisosorbide (DMI). Avantageusement, le DMI présente alors une pureté supérieure à 80%, préférentiellement supérieure à 90%.

La Société Demanderesse a notamment trouvé, comme il sera montré dans les exemples ci-après, que les composés sélectionnés selon l'invention et en premier lieu des composés éthérifiés de l'isosorbide, tout particulièrement le DMI, mais également les composés estérifiés sélectionnés tels que les esters d'isosorbide ou d'acide lactique mentionnés précédemment, permettaient :
- non seulement de se substituer avantageusement aux adjuvants, notamment aux agents fluxants, d'origine fossile lors de la préparation de compositions bitumineuses,
- mais encore d'être avantageusement utilisés comme moyen de traitement, notamment de nettoyage, de ces mêmes compositions bitumineuses. -

Il a été trouvé en particulier que le DMI permettait, tant pour la préparation que pour le nettoyage de compositions bitumineuses, de vérifier l'ensemble des critères a) à e) précités et ce, d'une manière aussi avantageuse, voire plus avantageuse pour certains aspects, que les monoesters méthyliques d'huiles végétales préconisés dans l'art antérieur.

Il a déjà été décrit, il y a plus de trente ans dans les brevets US 3,035,930 et US 3,594,202, l'usage d'esters dibasiques dans des compositions asphaltiques particulières. Certains esters particuliers d'acide adipique sont cités individuellement dans ces documents et ce, au sein de listes très longues de composés mais ne sont aucunement retenus dans les exemples. Surtout, les esters envisagés dans ces documents sont obligatoirement des esters à longues chaînes grasses, non volatils et de hauts poids moléculaires et, de préférence, sont obtenus à partir d'alcools contenant au moins 6 atomes de carbone. C'est notamment le cas des seuls esters d'acide adipique cités individuellement, mais aucunement exemplifiés, dans ces deux brevets, à savoir respectivement :
- le di(2-methylheptyl)adipate et le di(3-ethylhexyl)adipate, cités dans le brevet US 3,035,930,et
- le diisooctyl adipate et le diisodécyl adipate, cités dans le brevet US 3,594,202.

Les seuls produits dont l'usage est effectivement exemplifié, par ailleurs à des taux d'incorporation toujours élevés (globalement entre 20 et 65%/asphalte), sont respectivement des esters d'acide sébacique ou phtalique et plus précisément, respectivement, du bis (2-ethylhexyl) sébacate d'une part (US 3,035,930) et les diisooctyl- et diisodecylphtalates d' autre part (brevet US 3,594,202).

Comme souligné, il s'agit d'esters non volatils, de poids moléculaires élevés, en l'occurrence largement supérieurs à 350. Ils se présentent sous forme de liquides très huileux et sont utilisés, selon ces deux brevets, pour rendre mais aussi maintenir hautement flexibles les asphaltes et ce, non seulement à température ambiante mais également à des températures qui peuvent être extrêmement basses (inférieures à -40°C selon US 3, 035, 930) .

Il en résulte que, selon les enseignements de ces brevets, de tels esters, comme d'ailleurs les esters méthyliques d'huiles végétales précités, ne sont pas des agents fluxants car ils ne permettent pas d'obtenir une bonne montée en cohésion de l'asphalte après son application comme il est recherché pour remplacer les fluxants pétroliers.

Il convient également de préciser que si les esters méthyliques des acides adipique, succinique et glutarique ont déjà été préconisés comme agents nettoyants pour le traitement de circuits imprimés (« printed circuit board ») selon le brevet US 5,011,620, les enseignements dudit brevet ne permettent en aucun cas d'imaginer de pouvoir utiliser ces mêmes esters pour le nettoyage de substrats souillés spécifiquement par des compositions bitumineuses. Ceci est d'autant plus vrai que selon les mêmes enseignements, les esters en question ne sont efficaces pour le nettoyage de circuits imprimés que s'ils sont mélangés à des quantités extrêmement importantes de solvants hydrocarbonés, lesdits solvants représentant de 75 à 95% de ces mélanges. En outre, le brevet US 5,011,620 concernant un tout autre domaine que la préparation de compositions bitumineuses, il ne peut aucunement en être déduit un quelconque intérêt des esters précités dans ce domaine et tout particulièrement comme agents fluxants.

Par ailleurs, si l'utilisation de dérivés de dianhydrohexitols (esters, éthers mais aussi polyesters, carbonates, thioéthers, thioesters, amides, (thio)uréthanes, urée, phosphates et phosphonates) comme agents solvants ou plastifiants de polymères a été décrite dans le brevet WO 99/45060, les enseignements dudit brevet ne permettent en aucun cas d'imaginer de pouvoir utiliser ces mêmes dérivés, y compris les esters ou éthers, pour la préparation ou le traitement, notamment le nettoyage, de produis consistant spécifiquement en des compositions bitumineuses.

Les polymères envisagés tant dans la description que dans les exemples de ce document ainsi que les produits finis les contenant ne sont ni identiques ni similaires à des compositions bitumineuses telles que bitumes, liants bitumineux ou analogues rhéologiques de ceux-ci.

En outre, il est difficile de tirer des enseignements clairs de ce document. En effet, les exemples applicatifs en pages 3 à 6 de ce brevet WO 99/45060, lesquels ne concernent donc pas le domaine des compositions bitumineuses, ne précisent pas quel dérivé exact de dianhydrohexitol a été mis en oeuvre en tant que « plasticiser according to the invention ».Les effets exacts dudit dérivé sur le polymère ne sont pas toujours décrits ou déductibles , d'autant que dans de nombreux exemples ledit dérivé est associé à une quantité souvent conséquente d'un ou plusieurs solvants (toluène, acétate d'isopropyle/isopropanol, éthanol/acétate d'isopropyle, « minéral spirit »/méthanol).

Les exemples applicatifs 6 à 8 dudit brevet précisent cette fois la nature des plastifiants mis en oeuvre, à savoir des esters d'isosorbide ou d'isomannide. Cependant, encore une fois, ces exemples ne concernent pas le domaine de la préparation de compositions bitumineuses mais ceux de la préparation de films de PVC (exemples 6-7) ou de caoutchouc vulcanisé (exemple 8),i.e. de produits finis solides dont il est recherché la meilleure élasticité, étirabilité, souplesse ou flexibilité possibles. La fonction ici assurée par lesdits esters est différente de celle principalement recherchée conformément à la présente invention, à savoir la fonction d'agent fluxant apte à assurer une bonne montée en cohésion de la composition bitumineuse après son application.

En outre, les enseignements dudit brevet ne permettent en aucun cas d'imaginer de pouvoir utiliser ces mêmes esters pour le nettoyage de substrats souillés spécifiquement par des compositions bitumineuses.

En suite de quoi, on dispose désormais d'un nouveau moyen apte à être utilisé dans le domaine précité des compositions bitumineuses, en particulier comme agent fluxant ou nettoyant.

Ce moyen est formé par les composés sélectionnés conformément à l'invention et qui, en outre, présentent des caractéristiques générales se distinguant catégoriquement de celles présentées par les esters particuliers, de nature non volatile et très huileuse, tout particulièrement préférés ou exemplifiés dans les brevets US 3,035,930 et 3,594,202 précités.

De manière avantageuse, les composés utilisés selon l'invention présentent notamment des poids moléculaires et/ou des points éclairs significativement inférieurs à ceux desdits esters et notamment :
- un point éclair supérieur à 65°C et inférieur à 175 °C, de préférence supérieur à 90°C et inférieur à 170°C et plus préférentiellement encore supérieur à 100°C et inférieur à 165°C et/ou
- un poids moléculaire compris entre 100 et 300, de préférence entre 130 et 300 et plus préférentiellement encore entre 150 et 250.

De manière générale, les composés utilisés selon l'invention constituent un moyen qui peut notamment être mis en oeuvre pour la préparation ou le traitement de compositions choisies dans le groupe comprenant le pétrole brut, les mazouts, les goudrons, les bitumes et liants bitumineux, notamment les bitumes purs, les bitumes routiers, les bitumes industriels, les bitumes oxydés, les bitumes fluxés, les bitumes fluidifiés, les bitumes modifiés par des polymères, en particulier par des élastomères et/ou des polymères thermoplastiques, les bitumes pour émulsions et les émulsions de bitume, anioniques ou cationiques, les analogues rhéologiques desdits bitumes et liants bitumineux à base d'au moins une résine d'origine naturelle, éventuellement modifiée ultérieurement,les enduits, en particulier les enduits superficiels, les enrobés, en particulier les enrobés à chaud et les enrobés stockables et les peintures bitumineuses.

Ces compositions peuvent être destinées en particulier à la (re)construction, à l'entretien, à la réparation et/ou au nettoyage de chaussées de circulation (routes, allées, pistes cyclables, pistes d'aéroports ...), de chapes d'étanchéité, de revêtement de trottoirs, de revêtements d'ouvrage d'art, de bâtiments ou d'habitations, d'isolants thermiques et phoniques, de matériaux d'étanchéité ou de revêtements de protection contre la corrosion ou contre l'humidité, de surfaces ou d'enceintes de travail, de stockage ou de transport comme les paillasses de laboratoire, les cuves, pompes et citernes, ou de matières polluées comme le sable, les rochers ou les organismes vivants.

Ces compositions peuvent être avantageusement utilisées pour la réalisation de matériaux pour le bâtiment et les travaux publics et en particulier pour les constructions routières.

Ces compositions peuvent également être avantageusement utilisées pour la formulation ou l'enrobage de matériaux à base de matière(s) minérale(s) (par exemple de granulats ou de surfaces ou blocs de béton) ou à base de bois.

Elles peuvent notamment contenir au moins un produit, pris seul ou en mélange, choisi dans le groupe comprenant les bitumes, les élastomères naturels ou synthétiques, notamment de type polybutadiène, latex naturel, caoutchouc, styrène-butadiène (SBR), styrène-butadiène-styrène (SBS) ou copolyméres d'éthylène comme par exemple éthylène/vinylacétate( EVA) ou éthylène butyl acétate (EBA), les polymères thermoplastiques, notamment de type polyoléfine, polyamide , polyester, polylactates, polyhydroxyalcanoates ou polybutylsuccinates, les résines naturelles ou naturelles modifiées, les huiles minérales, animales et végétales et les dérivés desdites huiles, les agents tensioactifs, les agents d'adhésivité, les agents de rhéologie, les agents de réticulation, par exemple de polymères, les pigments , les matières colorantes et les granulats tels que cailloux, graviers, gravillons et/ou sables.

La présente invention a entre autres pour objet un procédé de préparation ou de traitement d'une composition bitumineuse, caractérisé par le fait que l'on met ladite composition en contact avec au moins un composé choisi dans le groupe constitué de :
- les esters des acides glycolique, lactique et gluconique, les esters méthyliques, éthyliques et iso-butyliques des acides glutarique, succinique et adipique, et
- les éthers ou esters d'un produit issu de la déshydratation interne d'un sucre, de préférence d'un sucre hydrogéné.

Ledit composé peut notamment être plus particulièrement choisi dans l'une ou l'autre des familles de composés mentionnées précédemment. Il peut également être plus particulièrement sélectionné de sorte à présenter des caractéristiques de point éclair et/ou de poids moléculaire se situant dans les gammes telles que décrites précédemment.

La composition bitumineuse peut être destinée à l'une quelconque des utilisations précitées, pour les constructions routières ou non, et contenir, à côté dudit composé, au moins l'un quelconque des produits précités (élastomères naturels ou synthétiques, résines naturelles ou naturelles modifiées, huiles minérales, animales et végétales et dérivés desdites huiles, agents tensioactifs, agents d'adhésivité, agents de rhéologie, agents de réticulation, pigments, matières colorantes et granulats, en particulier).

Le concept inventif de la présente invention couvre également une composition bitumineuse, caractérisée en ce qu'elle contient, en toutes proportions et de préférence à raison de 0,1 à 95% en poids, et plus préférentiellement de 0,5 à 50% en poids, au moins un composé choisi dans le groupe constitué de :
- les esters des acides glycolique, lactique et gluconique, les esters méthyliques, éthyliques et iso-butyliques des acides glutarique, succinique et adipique, et
- les éthers ou esters d'un produit issu de la déshydratation interne d'un sucre, de préférence d'un sucre hydrogéné.

Ledit composé peut notamment être plus particulièrement choisi dans l'une ou l'autre des familles de composés mentionnées précédemment. Il peut également être plus particulièrement sélectionné de sorte à présenter des caractéristiques de point éclair et/ou de poids moléculaire se situant dans les gammes telles que décrites précédemment.

La composition bitumineuse peut notamment contenir de 1 à 30 % en poids de l'un, au moins, des composés précités. Du fait de la grande efficacité de ces composés et de manière particulièrement avantageuse, elle en contient seulement de 1 à 18% en poids.

Le composé mis en oeuvre au sein de ladite composition bitumineuse, notamment dans les proportions indiquées ci-dessus, peut notamment être le diméthylisosorbide (DMI).

La composition bitumineuse peut être destinée à l'une quelconque des utilisations précitées, pour les constructions routières ou non, et contenir, à côté dudit composé, au moins l'un quelconque des produits précités (élastomères naturels ou synthétiques, résines naturelles ou naturelles modifiées, huiles minérales, animales et végétales et dérivés desdites huiles, agents tensioactifs, agents d'adhésivité, agents de rhéologie, agents de réticulation, pigments, matières colorantes et granulats, en particulier).

La présente invention a également pour objet l'utilisation, comme agent fluxant d'une composition bitumineuse, d'au moins un composé choisi dans le groupe constitué de :
- les esters des acides glycolique, lactique et gluconique, les esters méthyliques, éthyliques et iso-butyliques des acides glutarique, succinique et adipique, et
- les éthers ou esters d'un produit issu de la déshydratation interne d'un sucre, de préférence d'un sucre hydrogéné.

Ce nouvel agent fluxant de compositions bitumineuses peut tout particulièrement être le diméthylisosorbide (DMI). Ce composé peut notamment être envisagé en association, y compris sous forme de mélanges préconstitués, avec des esters méthyliques d'huiles végétales.

La Société Demanderesse a notamment constaté que le DMI était miscible en toutes proportions aux esters méthyliques d'huiles végétales. En suite de quoi, il est désormais possible d'associer, notamment sous forme de mélanges préconstitués, le DMI d'une part et lesdits esters méthyliques d'autre part, mélanges qui sont véritablement utilisables comme agents fluxants.

La présente invention a en outre pour objet l'utilisation, comme agent nettoyant d'une composition bitumineuse, d'au moins un composé choisi dans le groupe constitué de :
- les esters des acides glycolique, lactique et gluconique, les esters méthyliques, éthyliques et iso-butyliques des acides glutarique, succinique et adipique, et
- les éthers ou esters d'un produit issu de la déshydratation interne d'un sucre, de préférence d'un sucre hydrogéné.

Ce nouvel agent nettoyant de compositions bitumineuses peut notamment être le diméthylisosorbide (DMI), seul ou en association, notamment en mélange, avec d'autres produits comme, par exemple, les composés terpéniques.

De manière générale, le nouvel agent fluxant ou nettoyant de compositions bitumineuses selon l'invention présente avantageusement:
- un point éclair supérieur à 65°C et inférieur à 175 °C, de préférence supérieur à 90°C et inférieur à 170°C et plus préférentiellement encore supérieur à 100°C et inférieur à 165°C et/ou
- un poids moléculaire compris entre 100 et 300, de préférence entre 130 et 300 et plus préférentiellement encore entre 150 et 250.

La présente invention va être décrite de façon encore plus détaillée à l'aide des exemples qui suivent et qui ne sont aucunement limitatifs.

### EXEMPLE 1

Dans le cadre de cet essai, on étudie l'intérêt, en particulier comme agents fluxants, de composés organiques sélectionnés selon l'invention, dans le domaine de la préparation de compositions bitumineuses.

Un bitume, de type « 20/30 » fourni par la Société EUROVIA, est ramolli à une température de 100°C dans une étuve. Le bitume ramolli est introduit dans un pétrin malaxeur de marque RHEOMIX, chauffé à 135°C.

A partir de cette composition à base de bitume, non adjuvantée (« BITUME T1 »), on prépare les compositions bitumineuses ci-dessous (BITUMES T2, T3 et T4 non conformes à l'invention et BITUMES A, B et C conformes à l'invention) par introduction de 8% en poids/poids de bitume de, respectivement :
- BITUME T2 : un produit d'origine pétrochimique du commerce, classiquement utilisée comme agent fluxant de bitumes, présentant une odeur très prononcée, une couleur brune, une nature aromatique, un point éclair se situant entre 60 et 65°C, une température de distillation d' environ 190°C et une densité proche de 0,97,
- BITUME T3 : une composition à base d'esters méthyliques d'huile de tournesol, présentant une odeur caractéristique d'huile végétale brute, une couleur jaune clair, un point éclair de 188°C environ, une température de distillation proche de 350°C et une densité de 0,88 environ,
- BITUME T4 : idem BITUME T3 si ce n'est que l'on a introduit également 0,15% (en poids/poids du bitume) d'octanoate de manganèse en tant qu'agent siccatif,
- BITUME A : une composition de diméthylisosorbide (DMI)non odorante et préparée par la Demanderesse,
- BITUME B : lactate de butyle, d'odeur caractéristique, commercialisé par la Société SIGMA,
- BITUME C : la composition « DBE^{®} dibasic esters » à base d'esters diméthylés d'acides glutarique, succinique et adipique, peu odorante et commercialisée par la Société INVISTA.

Chacun des BITUMES T1 à T4 et A à C est malaxé pendant 30 minutes dans le pétrin / malaxeur puis, après extraction dudit pétrin, est amené à température ambiante.

On prélève chacun desdits BITUMES après réchauffage à 100°C et on mesure sur rhéomètre AR 2000, au cours d'un nouveau refroidissement, la viscosité des BITUMES lorsque leur température atteint 40°C (ci-après « VISCO 1 »).

Pour chacun des BITUMES T1 à T4 et A à C, on mesure de nouveau de la même façon la viscosité à 40°C mais après que chacun desdits BITUMES ait été stocké pendant 3 semaines à 50°C en flacon ouvert. Cette viscosité (ci-après « VISCO 2 ») ainsi mesurée permet d'appréhender l'évolution du comportement rhéologique, en particulier la « montée en cohésion », qui devrait être celle du bitume en cause après son application dans des conditions réelles de vieillissement en industrie routière.

Le tableau ci-dessous reprend, pour le bitume témoin non fluxé (BITUME T1), les BITUMES T2 à T4 non conformes à l'invention et les BITUMES A à C conformes à l'invention, les valeurs de VISCO 1 et VISCO 2 ainsi trouvées (exprimées en mPa.s) ainsi que la valeur du facteur de variation de ces viscosités égal au ratio VISCO 2 / VISCO 1 (et ci-après « INDICE V »).

| BITUME | VISCO 1 (mPa.s) | VISCO 2 (mPa.s) | INDICE V (VISCO 2/ VISCO 1) |
|---|---|---|---|
| T1 | 79 400 | 110 000 | 1,4 |
| T2 | 9 500 | 33 300 | 3,5 |
| T3 | 3 200 | 5 700 | 1,8 |
| T4 | 4 400 | 6 200 | 1,4 |
| A | 10 700 | 31 400 | 2,9 |
| B | 9 700 | 19 000 | 2,0 |
| C | 5 400 | 37 700 | 7,0 |

Ces résultats montrent globalement que :
1) le BITUME T1, non adjuvanté, est non seulement extrêmement visqueux (VISCO 1 de 79 400 mPas) mais qu'en outre, il continue de se viscosifier très significativement après vieillissement (VISCO 2 = 110 000 mPas),
2) les additifs mis en oeuvre dans chacun des BITUMES T2 à T4 et A à C, sont aptes à diminuer très significativement la viscosité initiale du bitume, y compris les compositions de DMI, de lactate de butyle et d'esters dibasiques DBE^{®} utilisées conformément à la présente invention au sein, respectivement, des BITUMES A, B et C,
3) la composition de l'art antérieur à base d'esters méthyliques d'huile de tournesol a effectivement un effet fluidifiant du bitume (cf. BITUMES T3 et T4). Par contre, elle ne permet pas, dans le cas présent et y compris en combinaison avec un agent siccatif (BITUME T4), d'obtenir une « montée en cohésion » du même ordre que celle obtenue avec l'agent fluxant classique d'origine pétrochimique(cf. BITUME T2 VISCO 1 = 9500 mPa.s ; VISCO 2 = 33 300 mPas). Cette composition ne peut donc pas répondre à tous les objectifs applicatifs recherchés et notamment à un usage dans la réalisation d'une route à fort trafic.
4) les composés utilisables conformément à la présente invention, en premier lieu le DMI (BITUME A) mais également les esters dibasiques (BITUME C) et, à un degré moindre, le lactate de butyle (BITUME B) permettent d'obtenir un comportement, en particulier une « montée en cohésion », (beaucoup) plus proche de celui observé avec ledit agent classique d'origine pétrochimique.

Il convient notamment d'insister ici sur l'intérêt d'un dérivé d'isosorbide comme le DMI qui permet donc, en tant qu'agent fluxant de composition de bitume et/ou de résine, de se substituer efficacement aux adjuvants de l'art antérieur, y compris d'origine fossile et ce, tout en présentant des caractéristiques intrinsèques particulièrement avantageuses et notamment :
- un point éclair relativement élevé, à savoir 120°C,
- une absence d'odeur ou d'effet irritant pour la peau et les yeux,
- une pression de vapeur extrêmement faible, à savoir 10⁻⁵ Pascals à 20°C,
- une absence d'effet négatif sur l'environnement, y compris aquatique et notamment une absence de bioaccumulation,
- une haute stabilité chimique,
- une absence de pouvoir corrosif vis-à-vis des métaux,
- une solubilité dans l'eau totale, en toutes proportions, qui lui communique une bonne rinçabilité.

Des essais menés par ailleurs par la Demanderesse ont montré que des esters d'isosorbide ou d'autres esters de l'acide lactique, en particulier des compositions à base, majoritairement, de diesters d'isosorbide comme le dioctanoate d'isosorbide ou de lactates d'hexyle, de butyle ou de dodécyle, pouvaient être également utilisés comme agents fluxants de bitumes et ce, contrairement aux esters méthyliques d'huiles végétales qui conduisent à des bitumes excessivement mous.

### EXEMPLE 2

Dans le cadre de cet exemple, on évalue l'intérêt de composés utilisables conformément à l'invention dans le traitement d'une composition bitumineuse et plus particulièrement comme agents solvants dans le nettoyage d'une surface, en l'occurrence d'une plaque de verre, souillée par une telle composition.

Le bitume, de type « 70/100 » fourni par la Société EUROVIA, mis en fusion, est étalé en un film d'environ 0,5 à 1 mm d'épaisseur sur la plaque de verre.

Lorsque le bitume ainsi étalé se retrouve à température ambiante, on dépose sur celui-ci des morceaux de coton inhibés du composé solvant à tester. Le coton est recouvert d'une cloche en verre pour limiter l'évaporation du solvant.

Chacun des composés est évalué selon deux tests, à savoir :
- TEST 1 : après 1 heure de contact entre le bitume et le coton inbibé, ce dernier est soulevé pour observer l'action du composé comme solvant du bitume.
   La notation suivante est adoptée pour ce TEST 1 :
   0 : coton intact,
   1 : traces de bitume sur le coton,
   2 : coton souillé sur toute la surface,
   3 : le bitume a été solubilisé par le solvant et a migré dans le coton.
- TEST 2 : le coton est ensuite frotté sur le bitume pour évaluer un nettoyage avec action mécanique.
   La notation suivante est adoptée pour ce TEST 2 :
   0 : coton intact,
   1 : traces de bitume sur le coton,
   2 : coton noirci,
   3 : attaque franche du bitume,
   4 : élimination facile du bitume.

On a soumis aux TEST 1 et TEST 2 les différents composés solvants ci-après :
- COMPOSE T1 : gazole de type « rouge »,
- COMPOSE T2 : D-limonène commercialisé par la Société PRODASYNTHE,
- COMPOSE T3 : composition d'esters méthyliques d'huile de tournesol décrite dans l'EXEMPLE 1,
- COMPOSE A : lactate d'hexyle synthétisé par la Demanderesse,
- COMPOSE B : mélange de 75% en poids de COMPOSE A et 25 % en poids de composé T3,
- COMPOSE C : mélange de 50% en poids de COMPOSE A et 50% en poids de COMPOSE T2,
- COMPOSE D : mélange de 75% en poids de COMPOSE A et 25% en poids de COMPOSE T2,
- COMPOSE E : composition à base d'environ 60% en poids (sec/sec) d'un mélange de dioctanoate d'isosorbide et de dioctanoate de sorbitan, obtenue par la Société Demanderesse à partir de sorbitol et d'acide octanoïque, ladite composition contenant par ailleurs, entre autres, des monooctanoates d'isosorbide et de sorbitan et des tri- et tétraoctanoates de sorbitan,
- COMPOSE F : mélange à 50% en poids de COMPOSE E et 50% en poids de COMPOSE T2,
- COMPOSE G : mélange de 65% en poids de COMPOSE T1 et 35% en poids du diméthyl isosorbide (DMI) décrit à l'EXEMPLE 1.

Le tableau ci-dessous reprend, pour chacun des COMPOSES T1 à T3 et A à G, la note obtenue pour chacun des TEST 1 et TEST 2 :

| COMPOSE | TEST 1 | TEST 2 |
|---|---|---|
| T1 | 1 | 4 |
| T2 | 2 | 4 |
| T3 | 2 | 3 |
| A | 2 | 3 |
| B | 2 | 3 |
| C | 2 | 4 |
| D | 2 | 3 |
| E | 1 | 2 |
| F | 2 | 3 |
| G | 1 | 4 |

Ce tableau montre globalement que des composés utilisables conformément à l'invention peuvent être mis en oeuvre comme agents solvants, y compris comme agents co-solvants, pour le traitement de compositions bitumineuses, en particulier pour le nettoyage de surfaces ou matières polluées ou souillées par de telles compositions.

C'est le cas, par exemple, du lactate d'hexyle, lequel peut avantageusement se substituer en tout ou partie à des produits tels que gazole, D-limonène ou esters méthyliques d'huiles végétales.

C'est le cas également des esters ou éthers d'isosorbide tels que, par exemple, le dioctanoate d'isosorbide et le diméthyl isosorbide (DMI).

En particulier, l'observation faite ici de la fonctionnalité du DMI comme agent solvant de bitume, associée aux nombreuses propriétés de ce composé telles que soulignées à l'EXEMPLE 1, permet d'envisager l'utilisation de ce produit pour des opérations industrielles de nettoyage ou de dépollution d'enceintes (cuves, par exemple), de surfaces (paillasses de laboratoire, par exemple) ou de matières (sable, rochers), y compris en substitution au moins partielle d'un composé d'origine fossile comme le gazole.

### EXEMPLE 3

Dans le cadre de cet essai, on étudie l'intérêt de di-octanoate d'isosorbide comme agent fluxant d'une composition bitumineuse consistant en un analogue rhéologique de bitume et comprenant, en poids :
- 78% de composition « DERTOLINE P2L » à base d'esters de colophane et de pentaérythritol, commercialisée par la Société DRT,
- 4% de polymères de type EVA 20/20, commercialisés par la Société ARKEMA, et
- 18% de di-octanoate d'isosorbide préparé par la Demanderesse
Pour cette composition bitumineuse conforme à la présente invention, on a mesuré les caractéristiques suivantes :
- température bille-anneau selon la norme NF EN 1427,
- pénétrabilité, en particulier à 25°C, selon la norme NF EN 1426, et
- indice de pénétrabilité.
Ceci, en comparaison des compositions témoins « T1 » et « T2 » ci-après :
- T1 : bitume routier de type « 50/70 » fourni par la Société EUROVIA,
- T2 : composition bitumineuse à base de 85% d'esters DERTOLINE P2L, 4% de polymères EVA 20/20 et 11% d'esters méthyliques d'huile de tournesol tels qu'utilisés dans l'EXEMPLE 1 ci-avant pour les BITUMES 3 et 4.
On constate que la composition bitumineuse conforme à l'invention présente :
- une valeur de température bille-anneau de 55,8°C, supérieure à celle obtenue pour les compositions témoins T1 (50°C) et T2 (55,4°C),
- une valeur de pénétrabilité à 25°C, exprimée en dixièmes de millimètres, de 59, supérieure à celle obtenue pour les compositions témoins T1 (52)et T2(47),
- une valeur d'indice de pénétrabilité LCPC voisine de 0 (-0,03) alors qu'elle est de l'ordre de - 1 pour les compositions T1 (-0,91) et T2 (-0,96).

Il en résulte que, globalement, les propriétés rhéologiques de la composition conforme à l'invention sont plus avantageuses que celles des compositions témoins. Ceci, du fait notamment de sa moindre susceptibilité aux variations de températures; ce qui laisse envisager des domaines applicatifs plus étendus.

## Revendications

1. Utilisation, pour la préparation ou le traitement de compositions bitumineuses, d'au moins un composé choisi dans le groupe constitué de :
- les esters des acides glycolique, lactique et gluconique, les esters méthyliques, éthyliques et iso-butyliques des acides glutarique, succinique et adipique, et,
- les éthers ou esters d'un produit issu de la déshydratation interne d'un sucre.

2. Utilisation selon la revendication 1, **caractérisée en ce que** ledit composé est un produit choisi parmi les lactates de méthyle, d'éthyle, de butyle, d'iso-butyle, d'hexyle, d'éthylhexyle, d'octyle, de décyle ou de dodécyle ou les mélanges d'au moins deux de ces produits.

3. Utilisation selon la revendication 1, **caractérisée en ce que** ledit composé est un mélange d'au moins deux de produits choisis parmi les esters méthyliques, éthyliques ou iso-butyliques des acides glutarique, succinique ou adipique.

4. Utilisation selon la revendication 1, **caractérisée en ce que** ledit composé est un éther ou ester d'un produit issu de la déshydratation interne d'un sucre, ledit sucre étant choisi parmi le glucose, le maltose, le lactose, le galactose, le saccharose, le mannose, le xylose, le ribose, le fructose, l'isomaltulose, le sorbose et l'idose, les équivalents hydrogénés des sucres précités et les mélanges d'au moins deux de ces produits.

5. Utilisation selon la revendication 4, **caractérisée en ce que** ledit composé est un éther ou un ester d'un produit issu de la déshydratation interne du sorbitol, du mannitol ou de l'iditol, et notamment d'un éther ou d'un ester d'isosorbide, de sorbitan, d'isommanide, de mannitan, d'isoidide ou d'iditan, ou d'un mélange d'au moins deux de ces produits.

6. Utilisation selon la revendication 4 ou 5, **caractérisée en ce que** ledit composé est choisi dans le groupe formé par les dérivés éthylés, méthylés, acétylés, butylés, isobutylés, hexylés, 2-éthyl hexylés, octénylés, laurylés, palmitylés, stéarylés ou oléylés d'isosorbide, de sorbitan, d'isommanide et/ou d'isoidide et les mélanges quelconques d'au moins deux quelconques de ces produits.

7. Utilisation selon l'une des revendications 4 à 6, **caractérisée en ce que** ledit composé est constitué pour au moins 50% de son poids (sec/sec), de diéther(s) ou de diester(s) d'isosorbide, de sorbitan, d'isommanide et/ou d'isoidide.

8. Utilisation selon la revendication 7, **caractérisée en ce que** ledit composé est constitué pour au moins 50% de son poids (sec/sec) de diméthylisosorbide.

9. Utilisation selon la revendication 8, **caractérisée en ce que** ledit composé est constitué pour au moins 80% de son poids (sec/sec) de diméthylisosorbide.

10. Utilisation selon l'une quelconque des revendications 1 à 9, **caractérisée en ce que** ledit composé présente un point éclair supérieur à 65°C et inférieur à 175 °C.

11. Utilisation selon l'une quelconque des revendications 1 à 10, **caractérisée en ce que** ledit composé présente un poids moléculaire compris entre 100 et 300.

12. Utilisation selon l'une quelconque des revendications 1 à 11, **caractérisée en ce que** ledit composé est utilisé pour la préparation ou le traitement de compositions choisies dans le groupe comprenant le pétrole brut, les bitumes et liants bitumineux, notamment les bitumes purs, les bitumes routiers, les bitumes industriels, les bitumes oxydés, les bitumes fluxés, les bitumes fluidifiés, les bitumes modifiés par des polymères, les bitumes pour émulsions et les émulsions de bitume, anioniques ou cationiques, les analogues rhéologiques desdits bitumes et liants bitumineux à base d'au moins une résine d'origine naturelle, éventuellement modifiée ultérieurement, les enduits, les enrobés, et les peintures bitumineuses.

13. Utilisation selon l'une quelconque des revendications 1 à 12, **caractérisée en ce que** les compositions bitumineuses sont destinées à la (re)construction, à l'entretien, à la réparation et/ou au nettoyage de chaussées de circulation, de chapes d'étanchéité, de revêtement de trottoirs, de revêtements d'ouvrage d'art, de bâtiments ou d'habitations, d'isolants thermiques ou phoniques, de matériaux d'étanchéité ou de revêtements de protection contre la corrosion ou contre l'humidité, de surfaces ou d'enceintes de travail, de stockage ou de transport comme les paillasses de laboratoire, les cuves, les pompes et citernes ou de matières polluées comme le sable, les rochers et les organismes vivants.

14. Utilisation selon l'une quelconque des revendications 1 à 13, **caractérisée en ce que** les compositions bitumineuses contiennent au moins un produit choisi dans le groupe formé par les bitumes, les élastomères naturels ou synthétiques, notamment de type polybutadiène, latex naturel, caoutchouc, styrène-butadiène (SBR), styrène-butadiène-styrène (SBS) ou copolymères d'éthylène, les polymères thermoplastiques, notamment de type polyoléfine, polyamide, polyester, polylactates, polyhydroxyalcanoates ou polybutylsuccinates, les résines naturelles ou naturelles modifiées, les huiles minérales, animales et végétales et les dérivés desdites huiles, les agents tensioactifs, les agents d'adhésivité, les agents de rhéologie, les agents de réticulation, les pigments , les matières colorantes et les granulats tels que cailloux, graviers, gravillons et/ou sables.

15. Utilisation selon l'une quelconque des revendications 1 à 14 pour la réalisation de matériaux pour le bâtiment et les travaux publics.

16. Procédé de préparation ou de traitement d'une composition bitumineuse, **caractérisé par le fait que** l'on met ladite composition en contact avec au moins un composé choisi dans le groupe constitué de :
- les esters des acides glycolique, lactique et gluconique, les esters méthyliques, éthyliques et iso-butyliques des acides glutarique, succinique et adipique et,
- les éthers ou esters d'un produit issu de la déshydratation interne d'un sucre.

17. Composition bitumineuse, **caractérisée en ce qu'**elle contient à raison de 0,1 à 95% en poids au moins un composé choisi dans le groupe constitué de :
- les esters des acides glycolique, lactique et gluconique, les esters méthyliques, éthyliques et iso-butyliques des acides glutarique, succinique et adipique et,
- les éthers ou esters d'un produit issu de la déshydratation interne d'un sucre.

18. Composition bitumineuse selon la revendication 17, **caractérisée en ce qu'**elle contient de 1 à 30% en poids de l'un au moins desdits composés.

19. Composition bitumineuse selon la revendication 18, **caractérisée en ce qu'**elle contient de 1 à 18% en poids de l'un au moins desdits composés.

20. Utilisation, comme agent fluxant d'une composition bitumineuse, d'au moins un composé choisi dans le groupe constitué de :
- les esters des acides glycolique, lactique et gluconique, les esters méthyliques, éthyliques et iso-butyliques des acides glutarique, succinique et adipique, et
- les éthers ou esters d'un produit issu de la déshydratation interne d'un sucre, de préférence d'un sucre hydrogéné.

21. Utilisation selon la revendication 20, **caractérisée en ce que** ledit composé est le diméthylisosorbide.

22. Utilisation selon la revendication 21, **caractérisée en ce que** le diméthylisosorbide est utilisé en association avec des esters méthyliques d'huiles végétales.

23. Utilisation, comme agent nettoyant d'une composition bitumineuse, d'au moins un composé choisi dans le groupe constitué de :
- les esters des acides glycolique, lactique et gluconique, les esters méthyliques, éthyliques et iso-butyliques des acides glutarique, succinique et adipique, et
- les éthers ou esters d'un produit issu de la déshydratation interne d'un sucre.

24. Utilisation selon la revendication 23, **caractérisée en ce que** ledit composé est le diméthylisosorbide.

25. Utilisation selon l'une quelconque des revendications 20 à 24, **caractérisée en ce que** ledit composé présente :
- un point éclair supérieur à 65°C et inférieur à 175 °C et/ou
- un poids moléculaire compris entre 100 et 300.

## Claims

1. Use, for preparing or treating bituminous compositions, of at least one compound chosen from the group consisting of:
- glycolic, lactic and gluconic acid esters, and the methyl, ethyl and isobutyl esters of glutaric, succinic and adipic acids, and
- ethers or esters of a product derived from the internal dehydration of a sugar.

2. Use according to Claim 1, **characterized in that** said compound is a product chosen from methyl, ethyl, butyl, isobutyl, hexyl, ethylhexyl, octyl, decyl or dodecyl lactate or mixtures of at least two of these products.

3. Use according to Claim 1, **characterized in that** said compound is a mixture of at least two products chosen from the methyl, ethyl and isobutyl esters of glutaric, succinic or adipic acid.

4. Use according to Claim 1, **characterized in that** said compound is an ether or ester of a product derived from the internal dehydration of a sugar, said sugar being chosen from glucose, maltose, lactose, galactose, sucrose, mannose, xylose, ribose, fructose, isomaltulose, sorbose and idose, hydrogenated equivalents of the abovementioned sugars and mixtures of at least two of these products.

5. Use according to Claim 4, **characterized in that** said compound is an ether or an ester of a product derived from the internal dehydration of sorbitol, mannitol or iditol and in particular an ether or an ester of isosorbide, of sorbitan, of isomannide, of mannitan, of isoidide or of iditan, or a mixture of at least two of these products.

6. Use according to Claim 4 or 5, **characterized in that** said compound is chosen from the group formed by the ethyl, methyl, acetyl, butyl, isobutyl, hexyl, 2-ethylhexyl, octenyl, lauryl, palmityl, stearyl or oleyl derivatives of isosorbide, of sorbitan, of isomannide and/or of isoidide and any mixtures of at least any two of these products.

7. Use according to one of Claims 4 to 6, **characterized in that** said compound consists to at least 50% of its weight (dry/dry) of diether(s) or diester(s) of isosorbide, of sorbitan, of isomannide and/or of isoidide.

8. Use according to Claim 7, **characterized in that** said compound consists to at least 50% of its weight (dry/dry) of dimethyl isosorbide.

9. Use according to Claim 8, **characterized in that** said compound consists to at least 80% of its weight (dry/dry) of dimethyl isosorbide.

10. Use according to any one of Claims 1 to 9, **characterized in that** said compound has a flash point of greater than 65°C and less than 175°C.

11. Use according to any one of Claims 1 to 10, **characterized in that** said compound has a molecular weight of between 100 and 300.

12. Use according to any one of Claims 1 to 11, **characterized in that** said compound is used for the preparation or treatment of compositions chosen from the group comprising crude petroleum, bitumens and bituminous binders, especially pure bitumens, road bitumens, industrial bitumens, oxidized bitumens, fluxed bitumens, fluidized bitumens, bitumens modified with polymers, bitumens for emulsions and anionic or cationic bitumens emulsions, rheological analogs of said bitumens and bituminous binders based on at least one resin of natural origin, which is optionally subsequently modified, coatings, road mixes, and storable road mixes, and bituminous paints.

13. Use according to any one of Claims 1 to 12, **characterized in that** the bituminous compositions are intended for (re)constructing, maintaining, repairing and/or cleaning traffic highways, leakproofing screeds, sidewalk coverings, artwork coverings, building or dwelling coverings, thermal and sound insulations, leakproofing or covering materials for protecting against corrosion or against humidity, working, storage or transportation surfaces or enclosures, such as laboratory workbenches, tanks, pumps and cisterns, or contaminated materials, such as sand, rocks and live organisms.

14. Use according to any one of Claims 1 to 13, **characterized in that** the bituminous compositions contain at least one product chosen from the group formed by bitumens, natural or synthetic elastomers, especially of polybutadiene type, natural latex, rubber, styrene-butadiene (SBR), styrene-butadiene-styrene (SBS) or ethylene copolymers, thermoplastic polymers, especially of polyolefin, polyamide, polyester, polylactate, polyhydroxyalkanoate or polybutylsuccinate type, natural or modified natural resins, mineral, animal and vegetable oils and derivatives of said oils, surfactants, adhesives, rheological agents, crosslinking agents, pigments, dyestuffs and granulates such as stones, gravel, broken gravel and/or sand.

15. Use according to any one of Claims 1 to 14, for the preparation of building and civil industry materials.

16. Process for preparing or treating a bituminous composition, **characterized in that** said composition is placed in contact with at least one compound chosen from the group consisting of:
- glycolic, lactic and gluconic acid esters, and the methyl, ethyl and isobutyl esters of glutaric, succinic and adipic acids, and
- ethers or esters of a product derived from the internal dehydration of a sugar.

17. Bituminous composition, **characterized in that** it contains, in a proportion of from 0.1% to 95% by weight, at least one compound chosen from the group consisting of:
- glycolic, lactic and gluconic acid esters, and the methyl, ethyl and isobutyl esters of glutaric, succinic and adipic acids, and
- ethers or esters of a product derived from the internal dehydration of a sugar.

18. Bituminous composition according to Claim 17, **characterized in that** it contains from 1% to 30% by weight of at least one of said compounds.

19. Bituminous composition according to Claim 18, **characterized in that** it contains from 1% to 18% by weight of at least one of said compounds.

20. Use, as a fluxing agent for a bituminous composition, of at least one compound chosen from the group consisting of:
- glycolic, lactic and gluconic acid esters, and the methyl, ethyl and isobutyl esters of glutaric, succinic and adipic acids, and
- ethers or esters of a product derived from the internal dehydration of a sugar, preferably of a hydrogenated sugar.

21. Use according to Claim 20, **characterized in that** said compound is dimethyl isosorbide.

22. Use according to Claim 21, **characterized in that** the dimethyl isosorbide is used in combination with methyl esters of vegetable oils.

23. Use, as an agent for cleaning a bituminous composition, of at least one compound chosen from the group consisting of:
- glycolic, lactic and gluconic acid esters, and the methyl, ethyl and isobutyl esters of glutaric, succinic and adipic acids, and
- ethers or esters of a product derived from the internal dehydration of a sugar.

24. Use according to Claim 23, **characterized in that** said compound is dimethyl isosorbide.

25. Use according to any one of Claims 20 to 24, **characterized in that** said compound has:
- a flash point of greater than 65°C and less than 175°C, and/or
- a molecular weight of between 100 and 300.

## Patentansprüche

1. Verwendung von wenigstens einer Verbindung ausgewählt aus der Gruppe bestehend aus:
- Estern der Glykol-, Milch- und Gluconsäure, den Methyl-, Ethyl- und Isobutylestern der Glutar-, Bernstein- und Adipinsäure und
- Ethern oder Estern eines Produktes, welches aus der inneren Dehydratisierung eines Zuckers erhalten wurde,
zur Herstellung oder Behandlung von Bitumenzusammensetzungen.

2. Verwendung gemäß Anspruch 1, **dadurch gekennzeichnet, dass** die Verbindung ein Produkt ist ausgewählt aus Methyl-, Ethyl-, Butyl, Isobutyl-, Hexyl-, Ethylhexyl-, Octyl-, Decyl- oder Dodecyllactat oder Mischungen von wenigestens zwei dieser Produkte.

3. Verwendung gemäß Anspruch 1, **dadurch gekennzeichnet, dass** die Verbindung ein Gemisch von wenigstens zwei Produkten ist ausgewählt aus den Methyl-, Ethyl- oder Isobutylestern der Glutar-, Bernstein- oder Adipinsäure.

4. Verwendung gemäß Anspruch 1, **dadurch gekennzeichnet, dass** die Verbindung ein Ether oder Ester eines Produktes ist, welches aus der inneren Dehydratisierung eines Zuckers erhalten wurde, wobei der Zucker ausgewählt ist aus Glukose, Maltose, Lactose, Galactose, Saccharose, Mannose, Xylose, Ribose, Fructose, Isomaltulose, Sorbose und Idose, den hydrierten Äquivalenten der vorstehenden Zucker und Mischungen von wenigstens zwei dieser Produkte.

5. Verwendung gemäß Anspruch 4, **dadurch gekennzeichnet, dass** die Verbindung ein Ether oder Ester eines Produktes ist, welches aus der inneren Dehydratisierung von Sorbitol, Mannitol oder Iditol erhalten wurde, und insbesondere eines Ethers oder Esters von Isosorbid, Sorbitan, Isomannid, Mannitan, Isoidid oder Iditan oder einer Mischung von wenigstens zwei dieser Produkte.

6. Verwendung gemäß Anspruch 4 oder 5, **dadurch gekennzeichnet, dass** die Verbindung ausgewählt ist aus der Gruppe gebildet aus den Ethyl-, Methyl-, Acetyl-, Butyl-, Isobutyl-, Hexyl-, 2-Ethylhexyl-, Octenyl-, Lauryl-, Palmityl-, Stearyl- oder Oleylderivaten von Isosorbid, Sorbitan, Isomannid und/oder Isoidid und den Mischungen von wenigstens zwei dieser Produkte.

7. Verwendung gemäß einem der Ansprüche 4 bis 6, **dadurch gekennzeichnet, dass** die Verbindung aus wenigstens 50 Gew.-% (trocken/trocken) Diether(n) oder Diester(n) von Isosorbid, Sorbitan, Isomannid und/oder Isoidid besteht.

8. Verwendung gemäß Anspruch 7, **dadurch gekennzeichnet, dass** die Verbindung aus wenigstens 50 Gew.-% (trocken/trocken) Dimethylisosorbid besteht.

9. Verwendung gemäß Anspruch 8, **dadurch gekennzeichnet, dass** die Verbindung aus wenigstens 80 Gew.-% (trocken/trocken) Dimethylisosorbid besteht.

10. Verwendung gemäß einem der Ansprüche 1 bis 9, **dadurch gekennzeichnet, dass** die Verbindung einen Zündpunkt oberhalb von 65 °C und unterhalb von 175 °C aufweist.

11. Verwendung gemäß einem der Ansprüche 1 bis 10, **dadurch gekennzeichnet, dass** die Verbindung ein Molekulargewicht im Bereich zwischen 100 und 300 aufweist.

12. Verwendung gemäß einem der Ansprüche 1 bis 11, **dadurch gekennzeichnet, dass** die Verbindung verwendet wird für die Herstellung oder Behandlung von Zusammensetzungen ausgewählt aus der Gruppe umfassend Rohöl, Bitumen und Bitumen-Bindemittel, insbesondere reines Bitumen, Straßenbau-Bitumen, Industriebitumen, oxidiertes Bitumen, Bitumen mit Fluxmittel, Verschnittbitumen, durch Polymere modifiziertes Bitumen, Bitumen für Emulsionen und anionische und kationische Bitumenemulsionen, Rheologie-Analoga dieser Bitumen und Bitumen-Bindemittel auf Basis von wenigstens einem natürlichen Harz, welches gegebenfalls später modifiziert wurde, Verputze, Mischgute und Bitumenanstriche.

13. Verfahren gemäß einem der Ansprüche 1 bis 12, **dadurch gekennzeichnet, dass** die Bitumenzusammensetzungen bestimmt sind für den (Wiederauf-)Bau, Instandhaltung, Reparatur und/oder Reinigung von Verkehrsstraßen, wasserdichte Überzüge, Beläge für Bürgersteige, Beläge für den Ingenieurbau, für Gebäude oder Wohnungen, Wärme- oder Schallisolierungen, wasserdichte Materialien oder Schutzbeläge gegen Korrosion oder gegen Feuchtigkeit, Oberflächen oder Bereiche für Arbeit, Lagerung oder Transport, wie Laborarbeitsplatten, Bottiche, Pumpen und Zisternen, oder für verunreinigte Materialien wie Sand, Felsen und lebende Organismen.

14. Verwendung gemäß einem der Ansprüche 1 bis 13, **dadurch gekennzeichnet, dass** die Bitumenzusammensetzungen wenigstens ein Produkt enthalten ausgewählt aus der Gruppe gebildet aus Bitumen, natürlichen oder synthetischen Elastomeren, insbesondere vom Polybutadien-, natürlichem Latex-, Kautschuk-, Stryrolbutadien- (SBR), Styrolbutadienstyroltyp (SBS) oder Ethylencopolymeren, thermoplastischen Polymeren, insbesondere vom Polyolefin-, Polyamid-, Polyester-, Polylactat-, Polyhydroxyalkanoat- oder Polybutylsuccinattyp, natürlichen oder natürlichen modifizierten Harzen, mineralischen, tierischen und pflanzlichen Ölen und Derivaten dieser Öle, Tensiden, Haftmitteln, Fließmitteln, Vernetzungsmitteln, Pigmenten, Farbstoffen und Granulaten wie Kieselsteinen, Kiesen, Splitt und/oder Sanden.

15. Verwendung gemäß einem der Ansprüche 1 bis 14 zur Herstellung von Materialien für den Bau und Tiefbau.

16. Verfahren zur Herstellung oder Behandlung einer Bitumenzusammensetzung, **dadurch gekennzeichnet, dass** man die Zusammensetzung in Kontakt bringt mit wenigstens einer Verbindung ausgewählt aus der Gruppe bestehend aus:
- Estern der Glykol-, Milch- und Gluconsäure, den Methyl-, Ethyl- und Isobuthylestern der Glutar-, Bernstein- und Adipinsäure und
- Ethern oder Estern eines Produktes, welches aus der inneren Dehydratisierung eines Zuckers erhalten wurde.

17. Bitumenzusammensetzung, **dadurch gekennzeichnet, dass** sie in einer Menge von 0,1 bis 95 Gew.-% wenigstens eine Verbindung enthält ausgewählt aus der Gruppe bestehend aus
- Estern der Glykol-, Milch- und Gluconsäure, den Methyl-, Ethyl- und Isobuthylestern der Glutar-, Bernstein- und Adipinsäure und
- Ethern oder Estern eines Produktes, welches aus der inneren Dehydratisierung eines Zuckers erhalten wurde.

18. Bitumenzusammensetzung gemäß Anspruch 17, **dadurch gekennzeichnet, dass** sie von 1 bis 30 Gew.-% von wenigstens einer der Verbindungen enthält.

19. Bitumenzusammensetzung gemäß Anspruch 18, **dadurch gekennzeichnet, dass** sie von 1 bis 18 Gew.-% von wenigstens einer der Verbindungen enthält.

20. Verwendung von wenigstens einer Verbindung ausgewählt aus der Gruppe bestehend aus:
- Estern der Glykol-, Milch- und Gluconsäure, den Methyl-, Ethyl- und Isobuthylestern der Glutar-, Bernstein- und Adipinsäure und
- Ethern oder Estern eines Produktes, welches aus der inneren Dehydratisierung eines Zuckers erhalten wurde, vorzugsweise eines hydrierten Zuckers,
als Fluxmittel einer Bitumenzusammensetzung.

21. Verwendung gemäß Anspruch 20, **dadurch gekennzeichnet, dass** die Verbindung Dimethylisosorbid ist.

22. Verwendung gemäß Anspruch 21, **dadurch gekennzeichnet, dass** das Dimethylisosorbid in Verbindung mit Methylestern von Pflanzenölen verwendet wird.

23. Verwendung von wenigstens einer Verbindung ausgewählt aus der Gruppe bestehend aus:
- Estern der Glykol-, Milch- und Gluconsäure, den Methyl-, Ethyl- und Isobuthylestern der Glutar-, Bernstein- und Adipinsäure und
- Ethern oder Estern eines Produktes, welches aus der inneren Dehydratisierung eines Zuckers erhalten wurde.
als Reinigungsmittel einer Bitumenzusammensetzung.

24. Verwendung gemäß Anspruch 23, **dadurch gekennzeichnet, dass** die Verbindung Dimethylisosorbid ist.

25. Verwendung gemäß einem der Ansprüche 20 bis 24, **dadurch gekennzeichnet, dass** die Verbindung aufweist:
- einen Zündpunkt oberhalb von 65 °C und unterhalb von 175 °C und/oder
- ein Molekulargewicht im Bereich zwischen 100 und 300.
